# EUROPEAN PATENT SPECIFICATION

(11) **EP 2 188 953 B1**
(45) Date of publication and mention of the grant of the patent: **25.09.2013**
(21) Application number: 08787190.1
(22) Date of filing: 13.08.2008
(51) Int. Cl.: H04L 12/40

(54) **REAL-TIME INDUSTRIAL ETHERNET ETHERCAT COMMUNICATION CONTROL**
INDUSTRIELLE ECHTZEIT-ETHERNET-ETHERCAT-KOMMUNIKATIONSSTEUERUNG
COMMANDE DE COMMUNICATION ETHERCAT POUR ETHERNET INDUSTRIEL EN TEMPS RÉEL

(30) Priority: 15.08.2007 CN 200710120312
(43) Date of publication of application: 26.05.2010
(73) Proprietor: Beckhoff Automation GmbH, 33415 Verl (DE)
(72) Inventor: ROSTAN, Martin, 90482 Nürnberg (DE); LIU, YangQiang, Beijing 100083 (CN); HUAN, Ji, Beijing 100083 (CN); XIAO, Wenlei, Beijing 100083 (CN)
(74) Representative: Patentanwaltskanzlei WILHELM & BECK
(86) International application number: PCT/EP2008/060639
(87) International publication number: WO 2009/021974

(56) References cited:
- EP-A- 1 075 110
- DE-U1- 20 023 360
- JANSSEN D ET AL: "ETHERCAT - DER ETHERNET-FELDBUS FUNKTIONSWEISE UND EIGENSCHAFTEN - 1. TEIL" ELEKTRONIK, WEKA FACHZEITSCHRIFTENVERLAG, POING, DE, vol. 52, no. 23, 11 November 2003 (2003-11-11), pages 64,66-72, XP001177407 ISSN: 0013-5658
- JANSSEN D ET AL: "Ethernet field bus. Part 2" ELEKTRONIK, WEKA FACHZEITSCHRIFTENVERLAG, POING, DE, vol. 52, no. 25, 9 December 2003 (2003-12-09), pages 62-67, XP001538791 ISSN: 0013-5658
- TUERKE C: "INTERBUS-S IN DER REGELSCHLEIFE. ÖDATENTRANSFER VON SLAVE ZU SLAVE MACHT'S MOEGLICH" ELEKTRONIK, WEKA FACHZEITSCHRIFTENVERLAG, POING, DE, vol. 44, no. 12, 13 June 1995 (1995-06-13), pages 79,81-84, XP000515422 ISSN: 0013-5658

## Description

### 1. Field of the invention

The present invention relates to a micro processor based communication controller for real-time industrial Ethernet EtherCAT, used in industrial automation field.

### 2. Background of the invention

EtherCAT is a real-time industrial Ethernet technology especially suitable for communication between control systems and peripheral devices like I/O systems, drives, sensors and actuators. It is part of IEC 1158 and IEC61800.

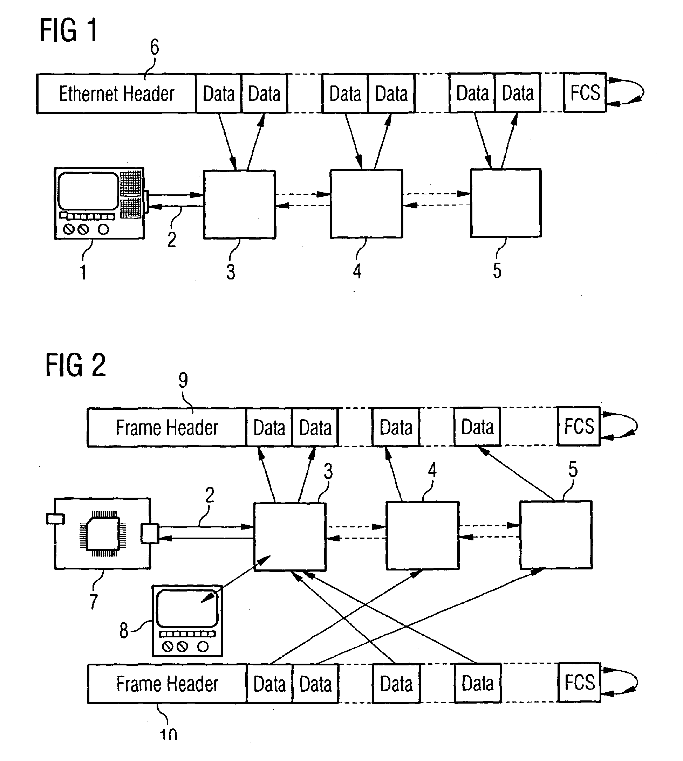

The existing architecture of EtherCAT system consists of a PC as the master and some ESCs (EtherCAT Slave Controller) as slaves, as show in Fig. 1. Component 1 is PC with 100Mb/s Ethernet interface as master, component 2 is cable and 3,4,5 is slave nodes. The PC master plays the roles of both communication master and control master, therefore it makes the master code very complex for learner and special technology must be introduced to achieve the expected fast communication speed.

JANSSEN D ET AL: "ETHERCAT - DER ETHERNET-FELDBUS FUNKTIONSWEISE UND EIGENSCHAFTEN - 1. TEIL "ELEKTRONIK, WEKA FACHZEITSCHRIFTENVERLAG, POING, DE, vol. 52, no. 23, 11 November 2003 (2003-11-11), pages 64, 66-72, CP001188407 ISSN: 0013-5658 and JANSSEN D ET AL: "Ethernet field bus.Part 2" ELEK-TRONIK, WEKA FACHZEITSCHRIFTENVERLAG, POING, DE, vol. 52, no. 25, 9 December 2003 (2003-12-09), pages 62-67, CP001538791 ISSN: 0013-5658 discloses a real-time industrial EtherCAT system comprising a communication master and a plurality of slaves, wherein the communication flow is as follows: The communication master sends a data-fetching frame. When the data-fetching frame passes through the slave nodes, the slave nodes input data for further slaves into the data-fetching frame. After return of the data-fetching frame, the communication master resends the data within a data-sending frame changing the read instruction of the data-fetching frame into a write instruction in the data-sending frame. Then the data-sending frame passes through the slave node, the slave node extracts data from the data-sending frame.

Janssen et al "ETHERCAT - DER ETHERNET-FELDBUS FUNKTIONSWEISE UND EIGENSCHAFTEN - 1. TEIL "ELEKTRONIK, WEKA FACHZEITSCHRIFTENVERLAG, POING, DE, vol. 52, no. 23, 11 November 2003 (2003-11-11), pages 64, 66-72, CP001188407 ISSN: 0013-5658 a further method for operating a real-time industrial Ethernet EtherCAT system.

### 3. Summary of the invention

It is the object underlying the invention to provide a method for operating a real-time industrial Ethernet EtherCAT system having a simplified implementation.

This object is met by a method for operating a real-time industrial Ethernet EtherCAT system according to claim 1. Preferred embodiments are disclosed in the subclaims.

The communication controller consists of the communication controller and corresponding computer program.

The controller consists of micro processor with 100Mb/s Ethernet and USB function integrated, Ethernet interface circuitry, USB interface circuitry, FLASH memory and other peripheral components. The communication controller is an EtherCAT master, connecting with slave nodes by cable. It can be configured by PC via USB interface offline, the configuration data is stored in the FLASH memory to be used by the controller

The corresponding computer program includes micro process based EtherCAT master communication program and PC based configuration software. The master communication cycle contains two EtherCAT frames; one is defined as data fetching frame and another as data sending frame. The master read input data from every slave nodes with data fetching frame and map the input data to output data according to communication relationship between slaves, then send output data to slaves with data sending frame. The slaves are defined as logic control master and logic control slave functionally Multi logic control master system can be implemented. The PC based software can exchange data with the communication controller via USB interface, configuring the controller and reading status data. Configuration data includes cycle time, definition of slave nodes as logical control master and logical control slaves, and according data address and length in the frame.

The advantages of the communication controller in this case are: 1. the control master can be embedded control unit, making EtherCAT more useful in non PC based control systems. 2. Implementing EtherCAT without detailed EtherCAT knowledge, making EtherCAT development easier.

### 4. Brief description of the drawing

- Fig. 1:: Principle of EtherCAT operation
- Fig. 2:: Principle of the present invention
- Fig. 3:: The software flow chart of the present invention;
- Fig. 4:: Data fetching and sending cycle chart of the present invention;
- Fig. 5:: Sketch map of configuring the controller by PC via USB;
- Fig. 6:: The architecture of communication controller in Fig. 2;

The components are numbered as follows:

| | |
|---|---|
| 1. PC master | 2. Communication cable |
| 3. 4. 5. Slave nodes | 6. EtherCAT frame |
| 7. Communication controller | 8. Control unit |
| 9. Data fetching frame | 10. Data sending frame |
| 11. Data fetching and sending cycle time | |
| 12. USB cable | 13. PC computer |
| 14. Micro processor | 15. USB interface |
| 16. Ethernet interface | 17. FLASH memory |

### 5. Detailed description of preferred embodiment

The communication controller consists of the communication controller and corresponding computer program.

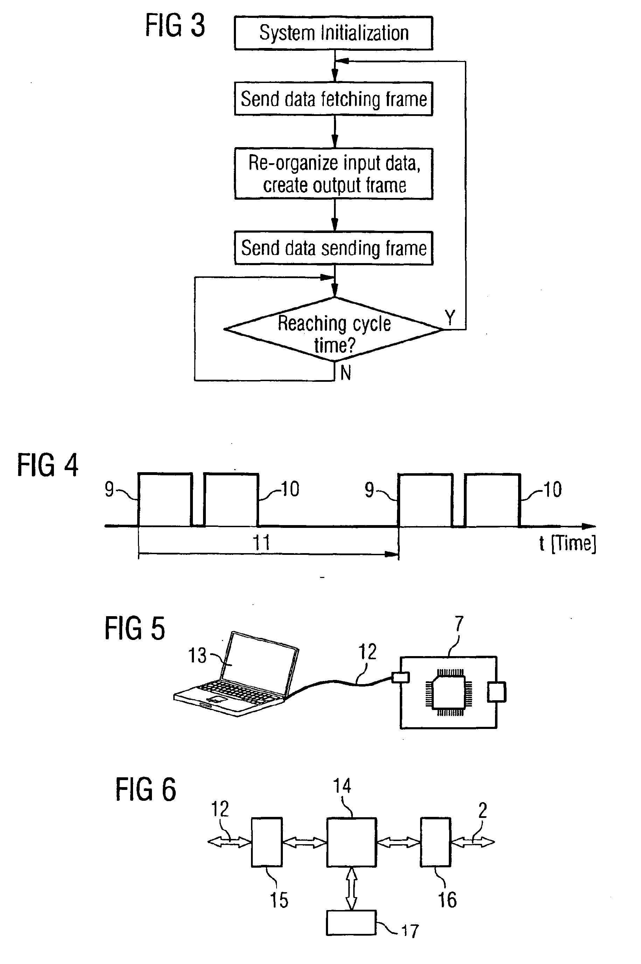

Fig. 6 is the architecture of communication controller hardware. It consists of micro processor 14 with 100Mb/s Ethernet and USB function integrated, Ethernet interface circuitry 16, USB interface circuitry 15, FLASH memory 17 and other peripheral components. Micro processor is the central component to implement the function. The communication controller connects with slaves via Ethernet cable 2 and connects with configuring PC via USB cable 12.

The communication controller manages the data flow of the communication, as shown in Fig. 2. The controller 7 initiates and controls the data frame transmitting inside the system. Slave 3 is defined as logic control master which is managed by control unit 8; Slave 4 and 5 are defined as logic control slave. A communication cycle consists of frame 9 and 10; the communication flow is as follows:
1. Controller 7 sends a data fetching frame 9. When frame 9 passes through node 3, logic control master will input control data for logic control slaves into the frame; when the frame 9 passes through node 4 and 5, the logic control slaves input their status data into the frame.
2. After the frame returns to the controller, it is re-organized as the output data according to the control relationship between logic control master and logic control slaves.
3. The controller sends the data sending frame 10 with output data. When the frame 10 passes through node 3, the logic control master will get the status data of logic control slaves from the specified datagram of the frame; when the frame 10 passes through node 4 and 5, every logic control slave get the command data from the specified datagram of the frame.

Fig. 3 illustrates the software flow chart of data fetching and sending cycle. It runs with a cycle time 11 as show in Fig. 4, which can be 0.1 to 10 milliseconds depending on the control task and associated nodes.

Fig. 5 shows a PC 13 configures the communication controller 7 via USB cable 12. Configuration data includes cycle time, definition of slave nodes as logical control master and logical slave, and according data address and length in the frame and is stored in the FLASH memory to be used by the controller.

## Claims

1. A method for operating a real-time industrial Ethernet EtherCAT system comprising a communication master (7) and a plurality of slave nodes (3, 4, 5), wherein one slave node acts as a logic control master (3) and the further slave nodes (4, 5) act as logic control slaves and wherein a communication flow is as follows:
the communication master (7) sends a data fetching frame (9),
when the data fetching frame (9) passes through the logic control master (3), the logic control master (3) inputs control data for the logic control slaves (4, 5) into the data fetching frame (9),
when the data fetching frame (9) passes through the logic control slaves (4, 5), each logic control slave (4, 5) inputs status data into the data fetching frame (9),
after return of the data fetching frame (9) to the communication master (7), the communication master (7) sends a data sending frame (10) with output data, said output data being reorganized according to the control relationship between the logic control master (3) and the logic control slaves (4, 5) by the communication master,
when the data sending frame (10) passes through the logic control master (3), the logic control master (3) gets the status data of the logic control slaves (4, 5) from the data sending frame (10),
when the data sending frame (10) passes through the logic control slaves (4, 5), each logic control slave (4, 5) gets command data from data sending frame (10).

2. The method for operating a real-time industrial Ethernet EtherCAT system according to claim 1, wherein the communication master (7) consists of a hardware and a corresponding computer program and is connected with the slave nodes via a cable (2), wherein the hardware of the communication master consists of a micro processor (14) with 100Mb/s Ethernet and USB function integrated, an Ethernet interface (16), an USB interface (15), a FLASH memory (17) and other peripheral components.

3. The method for operating a real-time industrial Ethernet EtherCAT system according to claim 2, wherein the FLASH memory (17) stores configuration data including a cycle time, a definition of the plurality of slave nodes as the logical control master and the logical control slaves, corresponding data addresses and a length of the data frame.

## Patentansprüche

1. Verfahren zum Betreiben eines industriellen Echtzeit-Ethernet-EtherCAT-Systems, das einen Kommunikations-Master (7) und mehrere Slave-Knoten (3, 4, 5) umfasst, wobei ein Slave-Knoten als ein Logiksteuer-Master (3) wirkt und die weiteren Slave-Knoten (4, 5) als Logiksteuer-Slaves wirken und wobei ein Kommunikationsfluss folgendermaßen ist:
ein Kommunikations-Master (7) sendet einen Datenholrahmen (9), wobei dann, wenn sich der Datenholrahmen (9) durch den Logiksteuer-Master (3) bewegt, der Logiksteuer-Master (3) Steuerdaten für die Logiksteuer-Slaves (4, 5) in den Datenholrahmen (9) eingibt,
dann, wenn sich der Datenholrahmen (9) durch die Logiksteuer-Slaves (4, 5) bewegt, jeder Logiksteuer-Slave (4, 5) Statusdaten in den Datenholrahmen (9) eingibt,
nach der Rückkehr des Datenholrahmens (9) zu dem Kommunikations-Master (7) der Kommunikations-Master (7) einen Datensenderahmen (10) mit Ausgangsdaten sendet, wobei die Ausgangsdaten in Übereinstimmung mit der Steuerungsbeziehung zwischen dem Logiksteuer-Master (3) und den Logiksteuer-Slaves (4, 5) durch den Kommunikations-Master umorganisiert werden,
dann, wenn sich der Datensenderahmen (10) durch den Logiksteuer-Master (3) bewegt, der Logiksteuer-Master (3) die Statusdaten der Logiksteuer-Slaves (4, 5) aus dem Datensenderahmen (10) erhält und
dann, wenn sich der Datensenderahmen (10) durch die Logiksteuer-Slaves (4, 5) bewegt, jeder Logiksteuer-Slave (4, 5) Befehlsdaten aus dem Datensenderahmen (10) erhält.

2. Verfahren zum Betreiben eines industriellen Echtzeit-Ethernet-EtherCAT-Systems nach Anspruch 1, wobei der Kommunikation-Master (7) aus einer Hardware und einem entsprechenden Computerprogramm besteht und mit den Slave-Knoten über ein Kabel (2) verbunden ist, wobei die Hardware des Kommunikation-Masters aus einem Mikroprozessor (14) mit integriertem 100 Mb/s-Ethernet und integrierter USB-Funktion, einer Ethernet-Schnittstelle (16), einer USB-Schnittstelle (15), einem FLASH-Speicher (17) und anderen Peripheriekomponenten besteht.

3. Verfahren zum Betreiben eines industriellen Echtzeit-Ethernet-EtherCAT-Systems nach Anspruch 2, wobei der FLASH-Speicher (17) Konfigurationsdaten einschließlich einer Zykluszeit, einer Definition der mehreren Slave-Knoten als den Logiksteuer-Master und die Logiksteuer-Slaves, entsprechende Datenadressen und eine Länge des Datenrahmens speichert.

## Revendications

1. Procédé pour exploiter un système Ethernet EtherCAT industriel en temps réel comprenant un maître de communication (7) et une pluralité de noeuds esclaves (3, 4, 5), dans lequel un certain noeud esclave joue le rôle de maître de commande logique (3) et les autres noeuds esclaves (4, 5) jouent le rôle d'esclaves de commande logiques, et dans lequel un flux de communication s'établit comme suit :
le maître de communication (7) envoie une trame de récupération de données (9), lorsque la trame de récupération de données (9) transite par le maître de commande logique (3), le maître de commande logique (3) incorpore des données de commande pour les esclaves de commande logiques (4, 5) dans la trame de récupération de données (9),
lorsque la trame de récupération de données (9) transite par les esclaves de commande logiques (4, 5), chaque esclave de commande logique (4, 5) incorpore des données d'état dans la trame de récupération de données (9), après le renvoi de la trame de récupération de données (9) au maître de communication (7), le maître de communication (7) envoie une trame d'envoi de données (10) avec des données de sortie, lesdites données de sortie étant réorganisées selon la relation de commande entre le maître de commande logique (3) et les esclaves de commande logiques (4, 5) par le maître de communication,
lorsque la trame d'envoi de données (10) transite par le maître de commande logique (3), le maître de commande logique (3) obtient les données d'état des esclaves de commande logiques (4, 5) à partir de la trame d'envoi de données (10),
lorsque la trame d'envoi de données (10) transite par les esclaves de commande logiques (4, 5), chaque esclave de commande logique (4, 5) obtient des données de commande à partir de la trame d'envoi de données (10).

2. Procédé pour exploiter un système Ethernet EtherCAT industriel en temps réel selon la revendication 1, dans lequel le maître de communication (7) se compose d'un matériel et d'un programme d'ordinateur correspondant et est connecté aux noeuds esclaves par un câble (2), lequel matériel du maître de communication se compose d'un microprocesseur (14) avec une fonction USB et Ethernet 100 Mb/s intégrée, d'une interface Ethernet (16), d'une interface USB (15), d'une mémoire FLASH (17) et d'autres composants périphériques.

3. Procédé pour exploiter un système Ethernet EtherCAT industriel en temps réel selon la revendication 2, dans lequel la mémoire FLASH (17) enregistre des données de configuration comprenant un temps de cycle, une désignation de la pluralité de noeuds esclaves comme le maître de commande logique et les esclaves de commande logiques, des adresses de données correspondantes et une longueur de la trame de données.
